# EUROPEAN PATENT APPLICATION

(11) **EP 0 794 482 A1**
(43) Date of publication of application: **10.09.1997**
(21) Application number: 97200578.9
(22) Date of filing: 27.02.1997
(51) Int. Cl.: G06F 3/033

(54) **Input output device**

(30) Priority: 08.03.1996 GB 9604957
(71) Applicant: PHILIPS ELECTRONICS N.V., 5621 BA Eindhoven (NL)
(72) Inventor: Cadwell, Richard John, Redhill, Surrey RH1 5HA (GB)
(74) Representative: Ertl, Nicholas Justin

(57) **Abstract**

An input output device (24) for a computer system (10) has the functions of a conventional mouse, namely providing position indication and a selection function, and includes a memory so that selected data may be transferred between the computer system (10) and the mouse (24). This facilitates the transfer of such data between users or between computer systems, by physically transferring the mouse or its memory.

## Description

This invention relates to a manually operated device for inputting information to, or retrieving information from, a computer system.

Personal computer systems generally include a display screen for transmitting information to a user, a keyboard for manually inputting information, a disc drive for inputting or outputting electronic data and a mouse, which is an input device used in conjunction with software to provide a position input and a switch input to the computer system. Some or all of these peripheral devices may be integrated as a package, for example in the case of lap top computers.

Systems are known for networking groups of computers so that information may be sent between computers within that group. It is also possible to send information using electronic mail.

A problem in known system configurations is that difficulties arise in transferring data, such as a sections of text, from one user to another user or from one machine to another machine. This transfer of text may obviously be required in numerous situations. One possible method for transferring data between users using the known system configuration is to save a file incorporating the text onto disc and then to transfer the disc to the destinee of the information, who then loads the file from the disc, extracts the desired text from the file, and transfers this text to his chosen destination. Alternatively, the use of a mail system within a networked group of computers may be employed. This again involves the creation of a file which has to be sent, and then the destinee must open the file, select the relevant text and transfer that text to his chosen destination. These possibilities each require various manipulations and may be time-consuming.

Conventionally, a mouse or tracker ball device is used to control word processing programs to enable the selection and movement of blocks of text. Word processing programs rely upon a buffer where such blocks of text can be stored and recreated in other documents or duplicated in the same document. The present invention relies upon the use of the mouse or tracker ball device, or other such input device, as a buffer for storing text or graphics information.

According to the invention, there is provided a manually operated device for inputting information to, or retrieving information from a computer system including a display, the device comprising means for generating position data for controlling a position indicator on the display, and selection means, and having a memory for storing information for transferal to, or for reception from, the computer system.

The use of the manually operated device, such as a mouse or tracker ball device, as the storage element for information simplifies the procedure for transferring information between users. For example, the device may include wireless transmission means for transmitting information between the computer system and the device. In this way, a mouse, for example, with information stored in its memory may be physically transferred between users so that information stored in the mouse memory can be transferred immediately into the required document. Of course, a wired mouse with a memory may be unplugged and transferred, if there is provision for retaining the content of the memory, such as a power source or the use of a non-volatile memory.

Alternatively, the memory may comprise a non-volatile memory element which is removable from the device. In this case, data stored in the device may be transferred from one device to another device by transferring the memory element. In this way, the more conventional functions of the device as a position indicator and selection device may be retained irrespectively of whether the memory element is in place.

Embodiments of the invention will now be described by way of example, with reference to the accompanying drawings, in which:
Figure 1 shows a conventional computer system with peripheral devices;
Figure 2 shows the alteration to the system of Figure 1 through the use of an input/output device of the invention;
Figure 3 shows the system of Figure 2 with an alternative input/output device according to the invention;
Figure 4 shows a further modification to the system of Figure 2 using a second alternative input/output device of the invention; and
Figure 5 shows in greater detail the input/output device of Figure 4.

The invention provides a manually operated input/output device including means for generating position data for controlling a position indicator and selection means and having a memory for storing information for transferal to or for reception from the computer system. Thus, data selected by the input/output device can be stored in the device itself which facilities the transfer of information from one user to another user, as will be described in the following.

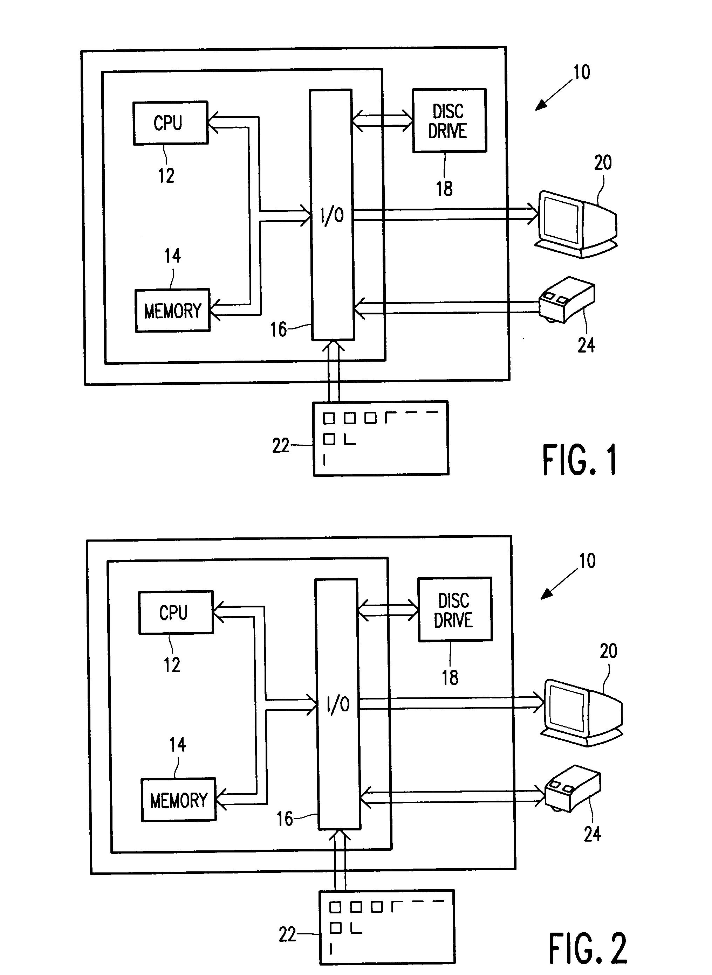

Figure 1 shows a conventional computer system in a schematic simplified form.

The system 10 basically comprises a central processing unit (CPU) 12 in the form of a microprocessor which is in communication with various memories 14 and with an input/output interface 16. The input/output interface is connected to various peripheral devices, such as a disc drive 18, monitor 20, keyboard 22 and mouse 24. As shown, the keyboard 22 and mouse 24 are input devices, as represented by the mono-directional buses, the monitor 20 is an output device and the disc drive 18 is bi-directionally interfaced with the input/output interface 16. Of course, numerous other peripheral devices exist, such as document scanners and printers.

One of the most important uses of personal computers is the treatment of text and graphics files. Frequently, it is desirable to transfer blocks of text or graphic information from one file to another file. It may equally be desirable to transfer such information between different users using different computers. Word processing programs commonly include commands which enable blocks of text to be highlighted and stored in a buffer within the memory 14. These commands may usually be activated either by using the keyboard or by operating the mouse. Typically, movement of the mouse is associated with movement on the screen of a position indicator such as an arrow or cross wires, and this movement is used to highlight sections of text for subsequent selection. Once information has been stored in the buffer, the user can then open any document and retrieve the information stored in the buffer so that data can be duplicated in different files. However, when such information is to be transferred between users of different machines, problems may arise. For example, where the system shown in Figure 1 represents an individual computer, which is not part of a computer network, then the transfer of information from one computer to another may be laborious. It is necessary to create a file containing the data to be transferred, to save the file to a disc using disc drive 18, and then to transfer the disc to the recipient of the information. This recipient must then load the disc, open the necessary file, and from within the file retrieve the information required and transfer that information to the required destination.

Alternatively, the system shown in Figure 1 may comprise one computer of a number of computers which together form a network. In this case information can be transferred between computers without using the disc drive 18, but again a file must be created within which the information is placed and the file is sent. The recipient again needs to open the file and retrieve the relevant information for transferal to the desired location.

The computer system of the invention is shown in Figure 2. The mouse 24 has a bi-directional interface with the input/output interface 16, and includes a memory for storing a limited amount of text or graphics information.

The connection between the interface 16 and the mouse 24 represents a wired connection, and the power supply to the mouse for the control of the memory may be through this wired connection. Text or graphics data may be stored in the memory of the mouse 24, and in order to transfer this data to a different user, the mouse may be unplugged and physically transferred. For example, it would be possible to take the mouse home from work with a document stored in the memory. Provision must be made for ensuring that the contents of the memory are not lost when the mouse is unplugged. The mouse may include a power source for this purpose, or the memory may be non-volatile and retain its contents when the power supply is removed.

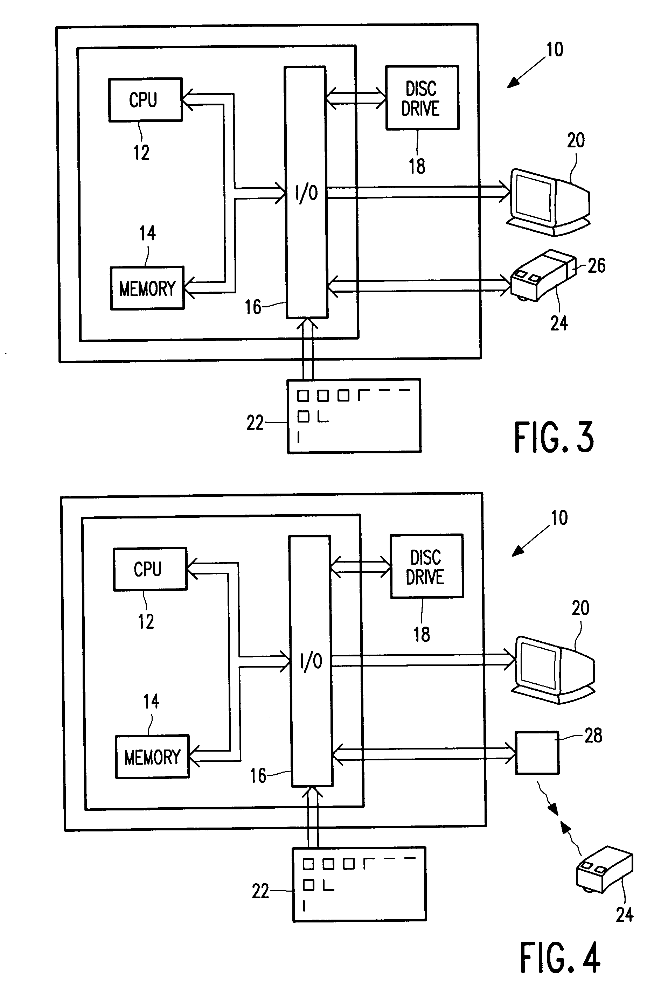

Figure 3 shows an alternative embodiment of the present invention, in which the mouse 24 includes a detachable memory element 26 so that information stored in the mouse 24 may be physically passed between users. Of course, the memory element 26 must comprise a non-volatile memory and it may take the form of a plug in chip, or a memory card. Again, the use of the mouse as a storage device simplifies the transfer of information between users. The physical transfer of the memory 26 (rather than a disc) enables the selected data to be retrieved immediately, without the need for loading intermediate files or selecting text within such files. The device may preferably still be used as a position indicator and selection device, even when the memory element has been removed. As in the embodiment of Figure 2, the device is connected to the computer system by a wired connection.

Figure 4 shows a further alternative embodiment of the invention in which the mouse 24 has a wireless connection with the computer system. For this purpose, the input/output interface 16 is connected by a bi-directional bus to a transceiver 28 which communicates with the mouse 24. For example, there may be infra-red connection between the mouse 24 and the transceiver 28.

Such a system enables the complete mouse 24 to be transferred more easily between users with information stored in the memory.

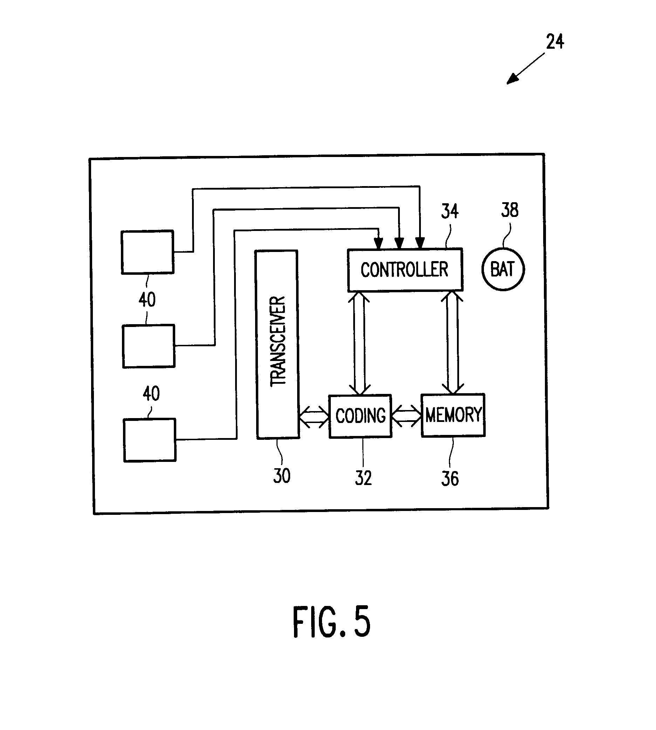

Figure 5 shows one possible internal construction of the mouse 24 shown in Figure 4. The mouse 24 comprises an infra-red transceiver 30 for transmitting information to or receiving information from the computer system transceiver 28. The infra-red coded information is encoded or decoded by a coding unit 32 which, under the control of a controller 34, transmits information to or receives information from the memory 36. The information received by the mouse 24 may include an identification flag which is recognised by the controller 34 so that the mouse 24 may only be usable with computers with appropriately configured transceivers 28. In this way, a mouse 24 may only be used with computers within a group, and the computer system transceivers 28 may be appropriately programmable to recognise additional mice. This may be used to ensure that one mouse 24 does not interfere with a different nearby computer. In the example shown in Figure 4, the mouse 24 needs a power source and this is represented by a battery 38 in Figure 5. Control switches 40 also supply signals to the controller 34 for transmission by the transceiver 30.

As described above, a computer system may be configured to recognise mice which include certain codes. Alternatively, or additionally, the device of the invention may store identification information relating to the owner of the device. Thus, a password may be required, for example, to initiate dialogue between the wireless mouse and a computer, for security reasons. If the device is personalised to an individual user, the device may additionally store information concerning preferred operating configurations of the user, such as default settings for a word processing program. This would give the input output device the function of an access tool which enables any computer to be used in a preferred mode of operation for the particular user.

Although in the examples described above the input/output device of the invention has been described as a mouse, any device which generates the position data for controlling a position indicator on a display, and therefore which may be used for processing of text and graphics files, may be provided with a memory in accordance with the invention. Thus, the invention is applicable to presently available touch-sensitive pads or tracker ball devices. The conventional interface of a mouse to a computer, although providing only for the passage of information from the mouse to the computer, is generally through a serial port which, with appropriate software, may be used for the bi-directional transfer of information. Consequently, conventional computer systems do not require hardware modification in order to enable interface with the device according to the invention. A software application is required, for example written so as to run in parallel with existing software packages, enabling the transfer of the contents of the word processing software buffer (commonly called the "clipboard") to the memory in the mouse.

In the wireless system of Figure 4, an infra-red system is preferred, as this avoids the complexities of protocols and security, as a result of the rapid attenuation of infra red radiation. However, short range radio frequencies may be used with an appropriate system of security coding and in accordance with protocols to avoid interference,

The memory used in the mouse, or other device, may be of a sufficient size only to support storage of text, if the cost of the mouse is to be kept to a minimum. Of course, larger memories may be employed to enable the storage of graphics information. In the case where the mouse is connected by a lead to the computer system, such as in the examples of Figure 2 and 3, the power for the operation of the mouse is transmitted by virtue of the interface with the computer system. An infra-red or other wireless communication system associated with the mouse will of course require a separate power source, with the consequent increase in cost of the mouse itself. The provision of a memory, however, should not add significant cost to the mouse although provision is required for ensuring that the contents of the memory are not lost during transfer between computer systems.

From reading the present disclosure, other modifications will be apparent to persons skilled in the art. Such modifications may involve other features which are already known in the design and use of electrical or electronic circuits and component parts thereof and which may be used instead of or in addition to features already described herein. Although claims have been formulated in this application to particular combinations of features, it should be understood that the scope of the disclosure of the present application also includes any novel feature or any novel combination of features disclosed herein either explicitly or implicitly or any generalisation of one or more of those features which would be obvious to persons skilled in the art, whether or not it relates to the same invention as presently claimed in any claim and whether or not it mitigates any or all of the same technical problems as does the present invention. The applicants hereby give notice that new claims may be formulated to such features and/or combinations of such features during the prosecution of the present application or of any further application derived therefrom.

## Claims

1. A manually operated device for inputting information to, or retrieving information from a computer system including a display, the device comprising means for generating position data for controlling a position indicator on the display, and selection means, and having a memory for storing information for transferal to, or for reception from, the computer system.

2. A device as claimed in claim 1 further comprising wireless transmission means for transmitting the information between the computer system and the device.

3. A device as claimed in claim 2, wherein the transmission system includes an infra-red system, the device comprising an infra-red transceiver, and having a power source for driving the transceiver and for operating the memory, the transceiver cooperating with an associated infrared transceiver of the computer system.

4. A device as claimed in claim 1 wherein the memory comprises a non-volatile memory element which is removable from the device.

5. A device as claimed in any preceding claim comprising a mouse.

6. A computer system including a manually operated device, as claimed in any preceding claim, for inputting information to, or retrieving information from the computer system.
